# EUROPEAN PATENT SPECIFICATION

(11) **EP 1 838 530 B1**
(45) Date of publication and mention of the grant of the patent: **23.06.2010**
(21) Application number: 04798321.8
(22) Date of filing: 24.11.2004
(51) Int. Cl.: B32B 33/00, B32B 27/04, E04B 1/76, B32B 15/08

(54) **MATERIAL WEB WHICH REFLECTS HEAT RADIATION AND METHOD FOR MANUFACTURING IT**
MATERIALBAHN, DIE WÄRMESTRAHLUNG REFLEKTIERT UND VERFAHREN ZU IHRER HERSTELLUNG
STRATIFIE THERMO-REFLECHISSANT ET PROCEDE DE FABRICATION

(43) Date of publication of application: 03.10.2007
(73) Proprietor: Walki Group Oy, 37601 Valkeakoski (FI)
(72) Inventor: PEURAMÄKI, Juhani, FI-37640 VALKEAKOSKI (FI)
(74) Representative: Hakola, Unto Tapani
(86) International application number: PCT/FI2004/000712
(87) International publication number: WO 2006/056637

(56) References cited:
- WO-A1-99/60222
- US-A- 4 467 005
- US-A- 5 096 759
- US-B1- 6 308 482

## Description

The present invention relates to a method for manufacturing a material web which reflects heat radiation and a material web which reflects heat radiation, comprising a first foil reflecting heat radiation, a thermoplastic layer attached to the first foil reflecting heat radiation, and a reinforcing net.

Publication US 6,308,482 discloses a reinforced roofing underlayment, which comprises a radiant barrier layer. A reinforcing scrim is placed between two thermoplastic layers. The thermoplastic layers can be extruded layers, or they may be adhesively affixed to the reinforcing scrim. The radiant barrier layer is attached to one of the thermoplastic layers.

The strength of the material web is an essential property for such products as the roof underlayment materials. A material web, which comprises a reinforcement net, is easily tom because yarns of the reinforcement net act as tear strips. The cause behind this phenomenon is the fact that when a thermoplastic layer is extruded on the net, the net is partially embedded into the still molten thermoplastic layer, and thus the net cuts separate areas from the thermoplastic layer.

The method for manufacturing a material web which reflects heat radiation is characterized by manufacturing a layered pre-structure comprising a first foil reflecting heat radiation, a first thermoplastic layer comprising material which has a first melting point, and a second thermoplastic layer having a second melting point, which is lower than the first melting point, heating the surface of the second thermoplastic layer to a temperature in which it starts to melt but which is lower than the first melting point, and attaching a reinforcement net to the second thermoplastic layer.

The material web which reflects heat radiation is characterized in that the web comprises two thermoplastic layers from which the first thermoplastic layer is attached to the first foil reflecting heat radiation, the second thermoplastic layer is attached to the first thermoplastic layer, and the reinforcing net is at least partially embedded into the second thermoplastic layer in such a manner that it leaves the first thermoplastic layer unaffected.

The material web according to the invention is an improvement compared to the prior technology. The material web is manufactured in such a manner that a pre-structure comprising at least two thermoplastic layers is manufactured first and a reinforcement net is attached on the surface of the outer thermoplastic layer. In that way the strength of the first thermoplastic layer is not impaired. Further, the material has an excellent flexural strength and impermeability (when not perforated). Compared to the qualities on the market the new material possesses the water vapour transmission rate which is about hundred times better.

The material produced by the method of the invention can be used as a a low emissivity material which reflects heat effectively. The low emissivity material can be used as a roof underlayment. In other words, in that use the material is placed between a roof support structure (roof truss) and an overlayment (tiles, roofing sheet). Other placings are also possible, for example in a case of retrofitting. Practical tests have shown that the ability to reflect heat is most effective when there is an air gap of from 20 to 25 mm between the roof and the low emissivity material.

Another possible use is to attach the material of the invention to an insulation material, such as mineral wool. In that use there is only one foil reflecting heat radiation, and the heat-reflecting material is attached to the insulating material by the second thermoplastic layer.

The low emissivity material reflects heat radiation, which is an important feature specially in geographical areas where temperature rises high in the daytime. Particularly useful the low emissivity material is in areas around the equator where the sun beams meet the ground substantially vertically so the roof receives most of the heat produced by the sun. Besides its ability to reflect heat radiation, the low emissivity surface as the underlayment must have certain other properties, for example it must act as a water barrier but at the same time it must allow penetration of water vapour.

In the method of the invention, first a pre-structure is manufactured. The pre-structure is a continuous web, which comprises more than one layer. The pre-structure comprises a first side and a second side. The first side is a first foil reflecting heat radiation, and the second side is a thermoplastic layer.

Usually the first thermoplastic layer comprises more than one layer. The first thermoplastic layer may comprise a first adhesion layer, a polyamide layer and a second adhesion layer. The first adhesion layer is to attach the first foil reflecting heat radiation to the polyamide layer. The second adhesion layer is on the other side of the polyamide layer, and it assists in attaching other layers to the thermoplastic layer. The both adhesion layers are preferably copolymers or terpolymers suitable for adhesion purposes.

The polyamide layer preferably consists of polyamide 6 or polyamide 66. The preferred polyamides are such that their melting point is at least 190°C. The polyamide layer is coextruded with the adhesion layers and the second thermoplastic layer on the first foil reflecting heat radiation. In the method of the invention, the polyamide layer is in a later process step treated by heat in such a manner that it achieves a suitable degree of crystallization. The crystallized polyamide gives to the material extra strength. For example, the burst strength may be 35 % better in the heat-treated material than in the non-treated material. The second thermoplastic layer is preferably of polyethylene. The melting point of polyethylene is much lower than that of polyamides, it is in the range from 105°C to 150°C.

To the ready pre-structure is attached a reinforcement net, which strengthens the material further. The net comprises yarns forming the net structure. The yarns are often twisted multifilament yarns comprising glass fibers or polyester fibers. Preferably the net is formed in such a manner that the yarns are not permanently bound to each other. In a preferred manufacturing method of the net, the yarns are laid criss-cross on top of each other, and led to an adhesive bath in which the yarns are impregnated with adhesive. When the adhesive dries it forms a weak bond between the crossing yarns, and thus the net withstands processing. The lay-out of the yarns depends on in which directions reinforcement is desired.

The net is attached to the pre-structure in such a manner that the polyamide layer is not affected. It is important that the net does not become embedded into the polyamide layer because then the material could easily be tom along the yarns of the net; The yarns would act as tear strips. Further, the strength of the polyamide layer would be affected. In the product of the invention the polyamide layer is solid when the reinforcement net is attached to the thermoplastic layer, and thus it remains unaffected. The foil reflecting heat radiation is not damaged either because the first thermoplastic layer is between the foil and the net.

Preferably the second thermoplastic layer is heated so that it becomes adherent, and the net is attached to the adherent thermoplastic layer. Because the melting point of the second thermoplastic layer is much lower than that of the polyamide layer the second thermoplastic layer can be melted without melting the polyamide layer, or the whole first thermoplastic layer. For melting of the thermoplastic layer and for crystallizing of the polyamide layer can be used flame. Other possibilities to bring the desired heat into the structure are hot air, infrared radiation, and a hot cylinder.

To the surface of the second thermoplastic layer is attached a second foil reflecting heat radiation. The second foil reflecting heat radiation is attached to the second thermoplastic layer when the second thermoplastic layer is still adherent after the flame treatment.

The first and second foils reflecting heat radiation are preferably aluminium foils having a thickness which is at the most 10 µm. Due to the reflection properties it is essential that the foils reflecting heat radiation are as outer layers of the material; Otherwise the reflection properties are impaired. The emissivity of the foil reflecting heat is at the most 0.05. In other words, it reflects at least 95 % of the received heat radiation. Besides the aluminium foil also other materials having the similar emissivity properties are possible.

It is also important that there is a foil reflecting heat radiation on the both sides of the material web because it is desirable that the underlayment material reflects heat radiation produced by the sun in the daytime and reflects back the heat which escapes from the building in the night.

The material web is heated in such a manner that the polyamide layer becomes crystallized to the desired degree. The polyamide layer is heated to a temperature, which is between 100 and 160°C, preferably between 120 and 140°C. Depending on the specific process which is used for the heat-treatment the preferred temperature range can also be between 110 and 130°C.

The polyamide layer is suddenly heated to the desired temperature, and it is allowed to cool down freely without any cooling means but the surrounding air. The heat treatment step can be performed simultaneously with the melting of the second thermoplastic layer (the flame heats also the polyamide layer), or after all the layers are ready because the heat treatment temperature is lower than the melting temperature of polyamide and thus the net cannot penetrate to the polyamide layer in that step either.

It is possible that the process comprises more than one process line but it is also possible that the whole product is produced by a single process line.

In the following, the invention is explained by using figures in which
Fig. 1 is a top view of a reinforcement net used in the material web of the invention,
Fig. 2 is a cross-section of the material web of the invention, and
Fig. 3 is a schematic view of one possible process line for producing the material web of the invention.

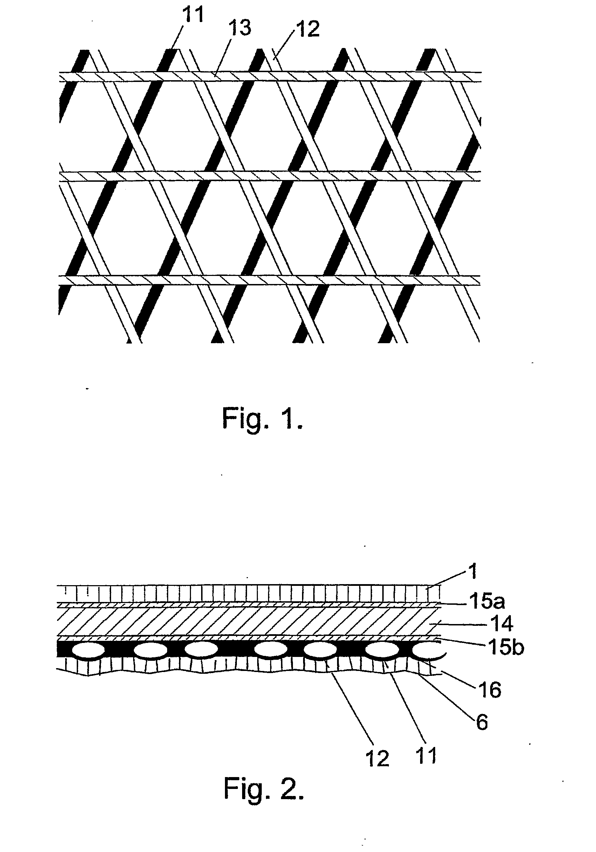

In Fig. 1 is shown the preferred structure of the reinforcement net. The yarns 11, 12 and 13 are laid loosely on top of each other. The yam 13 extends in a cross-direction of the net 4 (shown in Fig.2), and the yarns 11 and 12 extend diagonally. The lay-out of the net is formed in such a manner that the net is allowed to flow through an adhesive bath, the excess adhesive is squeezed off and the net is dried. Thus the yarns 11, 12 and 13 are attached to each other in the crossing points.

In Fig. 2 is shown a cross-sectional view of the material web according to the invention. An aluminium foil 1 and a first thermoplastic layer comprising a first adhesion layer 15a, a polyamide layer 14, and a second adhesion layer 15b form a pre-structure 3. A reinforcing net comprising yarns 11 and 12 (the yam 13 is not shown) is attached to the pre-structure 3. On the surface of the pre-structure 3 is an extruded second thermoplastic layer 16, which is preferably of polyethylene. On the surface of the second thermoplastic layer is attached a second foil reflecting heat radiation 6.

### Example 1.

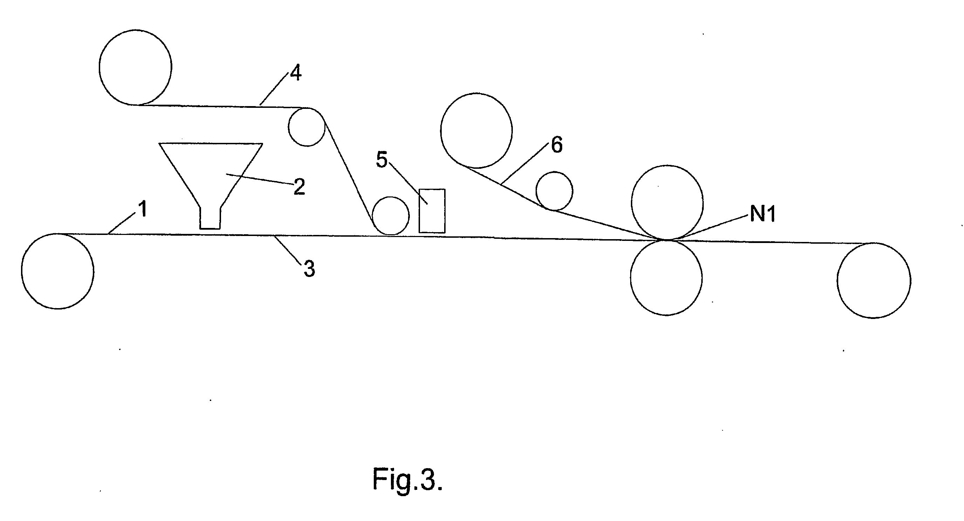

In Fig. 3 is presented one possible process line. An aluminium foil 1 is unwound from a roll. The thickness of the aluminium foil is preferably less than 10 µm, in this case the thickness is 6.35 µm. A first thermoplastic layer comprising a first adhesion layer 15a, a polyamide layer 14 and a second adhesion layer 15b, and a second thermoplastic layer 16 are extruded on the aluminium foil 1 by an extruder 2. The polyamide layer preferably consists of polyamide 6 and the adhesion layers can be for example of ethylene acrylic ester terpolymer, such as Lotader® (AtoChem, Belgium). The both adhesion layers have grammages of 2 g/m². The grammage of the polyamide layer is 15 g/m². The second thermoplastic layer is preferably of polyethylene and has a grammage of 5 g/m².

A reinforcement net 4 having a grammage of 5 g/m² is unwound from a roll, and it is attached to a prestructure 3 comprising the aluminium foil 1 and the thermoplastic layers. A flame jet 5 melts the second thermoplastic layer 16 of the pre-structure 3 rapidly without affecting the polyamide layer 14, and the reinforcement net 4 adheres to the molten second thermoplastic layer 16. The flame jet 5 also produces enough heat to crystallize the polyamide layer 14 to the desired degree. The polyamide layer 14 is heated to a temperature which is between 100 and 160°C, preferably between 120 and 140°C.

When the thermoplastic material is still in a molten state, a second foil reflecting heat radiation 6 is attached to the second thermoplastic layer in a nip N1. The thickness of the aluminium foil is preferably less than 10 µm, in this case the thickness is 6.35 µm.

The pre-structure 3, the reinforcement net 4 and the second foil reflecting heat radiation are brought into contact with each other in a nip N1, and a ready material web is wound to a roll.

The material web is perforated by a spike roll in order to achieve to the material web a suitable water vapour transmission rate which is preferably 50 - 100 g/m²/24 h measured in conditions T=23°C, RH=50 %. The material can be perforated also before the heat treatment.

Samples were taken from the web before and after the heat treatment. The burst strength of the sample, which was taken prior to the heat treatment, was 145 kPa and the burst strength of the sample, which was taken after the heat treatment, was 190 kPa. As seen from the results, the burst strength was over 30 % better when the sample was heat-treated. One must understand that the increase in the burst strength is measured from the material of the invention as a whole but the polyamide layer 14 is the only one whose strength increases.

### Example 2.

A pre-structure comprising an aluminium foil, a first adhesion layer, a polyamide layer, a second adhesion layer and a second thermoplastic layer was formed. The aluminium foil had a thickness of 7 µm, the polyamide layer had a thickness of 13 µm, and the heat-sealable second thermoplastic layer had a thickness of 4 µm. The effect of the heat-treatment was tested by testing the burst strength of the material. The test was made according to ISO 2758. The samples were tested before heat-treatment and after heat-treatment. The results are in table 1.

**Table 1. The burst strength results of the pre-structure.**

| Burst strength before heat-treatment (kPa) | Heat-treatment temperature (°C) | Burst strength after heat-treatment (kPa) |
|---|---|---|
| 115 | 110 | 145 |
| 112 | 120 | 150 |
| 107 | 130 | 150 |
| 116 | 140 | 121 |
| 120 | 150 | 108 |

There were some variation between the samples in the burst strength before the heat-treatment but despite the fact one can see from the results that the heat-treatment in the temperature which is between 110°C and 130°C is beneficial in regard to the burst strength.

The text above shows only examples about the present invention, and the examples do not restrict the invention any way. The scope of invention is defined in the claims.

## Claims

1. A material web which reflects heat radiation, comprising:
- a first foil reflecting heat radiation (1),
- a thermoplastic layer attached to the first foil reflecting heat radiation (1), and
- a reinforcing net (4),
**characterized in that** the web comprises two thermoplastic layers from which the first thermoplastic layer is attached to the first foil reflecting heat radiation (1), the second thermoplastic layer (16) is attached to the first thermoplastic layer, and the reinforcing net (4) is at least partially embedded into the second thermoplastic layer (16) in such a manner that it leaves the first thermoplastic layer unaffected.

2. The material web according to claim 1, **characterized in that** a second foil reflecting heat radiation (6) is attached to the second thermoplastic layer (16).

3. A method for manufacturing a material web according to claims 1 or 2, which reflects heat radiation, the method comprising:
- manufacturing a layered pre-structure (3) comprising a first foil reflecting heat radiation (1), a first thermoplastic layer comprising material which has a first melting point, and a second thermoplastic layer (16) having a second melting point, which is lower than the first melting point,
- heating the surface of the second thermoplastic layer (16) to a temperature in which it starts to melt but which is lower than the first melting point, and
- attaching a reinforcement net (4) to the second thermoplastic layer (16).

4. The method according to claim 3, **characterized in that** a second foil reflecting heat radiation (6) is attached to the second thermoplastic layer (16).

5. The method according to claim 3 or 4, **characterized in that** on the surface of the first foil reflecting heat radiation (1) are extruded the first thermoplastic layer and the second thermoplastic layer (16), the first thermoplastic layer comprising a polyamide layer (14), a first adhesion layer (15a) and a second adhesion layer (15b), the adhesion layers (15a, 15b) being on both sides of the polyamide layer (14).

## Patentansprüche

1. Materialbahn, welche Wärmestrahlung reflektiert, Folgendes umfassend:
- eine erste Wärmestrahlung reflektierende Folie (1),
- eine thermoplastische Schicht, die an der ersten Wärmestrahlung reflektierenden Folie (1) angebracht ist, und
- ein Verstärkungsnetz (4),
**dadurch gekennzeichnet, dass** die Bahn zwei thermoplastische Schichten umfasst, von welchen die erste thermoplastische Schicht an der ersten Wärmestrahlung reflektierenden Folie (1) angebracht ist, die zweite thermoplastische Schicht (16) an der ersten thermoplastischen Schicht angebracht ist und das Verstärkungsnetz (4) zumindest teilweise in einer solchen Weise in die zweite thermoplastische Schicht (16) eingebettet ist, dass es die erste thermoplastische Schicht unbeeinflusst lässt.

2. Materialbahn nach Anspruch 1, **dadurch gekennzeichnet, dass** eine zweite Wärmestrahlung reflektierende Folie (6) an der zweiten thermoplastischen Schicht (16) angebracht ist.

3. Verfahren zur Herstellung einer Materialbahn nach Anspruch 1 oder 2, welche Wärmestrahlung reflektiert, wobei das Verfahren Folgendes umfasst:
- Herstellen einer geschichteten Vorstruktur (3), die Folgendes umfasst: eine erste Wärmestrahlung reflektierende Folie (1); eine erste thermoplastische Schicht umfassend ein Material, welches einen ersten Schmelzpunkt hat; und eine zweite thermoplastische Schicht (16) mit einem zweiten Schmelzpunkt, welcher niedriger als der erste Schmelzpunkt ist,
- Erwärmen der Oberfläche der zweiten thermoplastischen Schicht (16) auf eine Temperatur, bei welcher sie zu schmelzen beginnt, doch welche niedriger als der erste Schmelzpunkt ist, und
- Anbringen eines Verstärkungsnetzes (4) an der zweiten thermoplastischen Schicht (16).

4. Verfahren nach Anspruch 3, **dadurch gekennzeichnet, dass** eine zweite Wärmestrahlung reflektierende Folie (6) an der zweiten thermoplastischen Schicht (16) angebracht wird.

5. Verfahren nach Anspruch 3 oder 4, **dadurch gekennzeichnet, dass** auf der Oberfläche der ersten Wärmestrahlung reflektierenden Folie (1) die erste thermoplastische Schicht und die zweite thermoplastische Schicht (16) extrudiert werden, wobei die erste thermoplastische Schicht eine Polyamidschicht (14), eine erste Haftschicht (15a) und eine zweite Haftschicht (15b) umfasst, wobei die Haftschichten (15a, 15b) sich an beiden Seiten der Polyamidschicht (14) befinden.

## Revendications

1. Bande de matière qui réfléchit un rayonnement thermique, comprenant :
- une première feuille réfléchissant un rayonnement thermique (1),
- une couche thermoplastique fixée à la première feuille réfléchissant un rayonnement thermique (1), et
- un réseau de renfort (4),
**caractérisée en ce que** la bande comprend deux couches thermoplastiques parmi lesquelles la première couche thermoplastique est fixée à la première feuille réfléchissant un rayonnement thermique (1), la deuxième couche thermoplastique (16) est fixée à la première couche thermoplastique, et le réseau de renfort (4) est au moins partiellement noyé dans la deuxième couche thermoplastique (16) de telle manière qu'il laisse la première couche thermoplastique non affectée.

2. Bande de matière selon la revendication 1, **caractérisée en ce qu'**une deuxième feuille réfléchissant un rayonnement thermique (6) est fixée à la deuxième couche thermoplastique (16).

3. Procédé de fabrication d'une bande matière selon la revendication 1 ou 2, qui réfléchit un rayonnement thermique, le procédé comprenant :
- la fabrication d'une pré-structure en couches (3) comprenant une première feuille réfléchissant un rayonnement thermique (1), une première couche thermoplastique comprenant une matière qui a un premier point de fusion, et une deuxième couche thermoplastique (16) ayant un deuxième point de fusion, qui est plus bas que le premier point de fusion,
- le chauffage de la surface de la deuxième couche thermoplastique (16) jusqu'à une température à laquelle elle commence à fondre mais qui est plus basse que le premier point de fusion, et
- la fixation d'un réseau de renfort (4) à la deuxième couche thermoplastique (16).

4. Procédé selon la revendication 3, **caractérisé en ce qu'**une deuxième feuille réfléchissant un rayonnement thermique (6) est fixée à la deuxième couche thermoplastique (16).

5. Procédé selon la revendication 3 ou 4, **caractérisé en ce que** sur la surface de la première feuille réfléchissant un rayonnement thermique (1) sont extrudées la première couche thermoplastique et la deuxième couche thermoplastique (16), la première couche thermoplastique comprenant une couche de polyamide (14), une première couche d'adhérence (15a) et une deuxième couche d'adhérence (15b), les couches d'adhérence (15a, 15b) étant sur les deux côtés de la couche de polyamide (14).
